# EUROPÄISCHE PATENTSCHRIFT

(11) **EP 1 580 224 B1**
(45) Veröffentlichungstag und Bekanntmachung des Hinweises auf die Patenterteilung: **23.04.2008**
(21) Anmeldenummer: 05005899.9
(22) Anmeldetag: 17.03.2005
(51) Int. Cl.: C08K 5/5419, C08L 83/04, C08G 77/04, C09K 3/10

(54) **Vernetzbare Massen auf der Basis von Organosiliciumverbindungen**
Organosilicon compounds containing curable compositions.
Compositions durcissables contenant des composés organosiliciques

(30) Priorität: 23.03.2004 DE 102004014216
(43) Veröffentlichungstag der Anmeldung: 28.09.2005
(73) Patentinhaber: Wacker Chemie AG, 81737 München (DE)
(72) Erfinder: Prasse, Marko, 01587 Riesa (DE)
(74) Vertreter: Budczinski, Angelika

(56) Entgegenhaltungen:
- EP-A- 0 814 110
- EP-B- 0 575 863
- US-A- 6 140 445
- US-B1- 6 254 811
- US-B1- 6 395 856

## Beschreibung

Die Erfindung betrifft durch Kondensationsreaktion vernetzbare Massen auf der Basis von Organosiliciumverbindungen mit regelbarem Modul, deren Herstellung sowie deren Verwendung als Dichtmassen.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie eingesetzt. Die Basis dieser Mischungen sind Polymere, die durch Silylgruppen terminiert sind, die reaktive Substituenten wie OH-Gruppen oder hydrolysierbare Gruppen, wie zum Beispiel Alkoxygruppen, tragen, sowie Vernetzer, wie zum Beispiel Alkoxysilane.

Vor allem für Fugendichtmassen ist es erwünscht, dass der Modul, das ist der Spannungswert bei 100% Dehnung eines Probekörpers, niedrig ist, damit möglichst wenig Kräfte auf die Fugenflanken einwirken. Eine andere wünschenswerte Eigenschaft betrifft die gleichmäßige Durchhärtung der Dichtmassen nach der Anwendung, so dass die Härteunterschiede zwischen Ober- und Unterseite der Fuge möglichst gering sind.

Seit langem bekannt ist die Herstellung oligomerer Vernetzer, erhältlich aus Cohydrolyse monomer Vernetzer, wie z.B. gemäß US-A 5,282,998 mittels Wasser und sauerem Katalysator. Oder wie in US-A 4,950,779 beschrieben mittels Ameisensäure und stark sauerem Katalysator. In US-A 6,395,856 wird die Umsetzung von Vinyltrialkoxysilanen mit Ameisensäure, H-Silanen oder höheren Alkoholen beschrieben. In all diesen Produkten ist der Gehalt an hydrolisierbaren Gruppen recht hoch. Außerdem müssen das Spaltprodukt bzw. nicht umgesetzte Monomere zusätzlich entfernt werden.
In US-A 5,837,784 wird die Umsetzung von MQ-Harzen mit Alkoxysilanen in Gegenwart basischer Katalysatoren beschrieben, wobei D- und T-Einheiten nur zu maximal 20 % vorkommen.

Gegenstand der Erfindung sind vernetzbare Massen auf der Basis von Organosiliciumverbindungen, dadurch gekennzeichnet, dass sie als Vernetzer (B) mindestens ein Organosiloxan aus Einheiten der Formel

R_{d}XₑSiO_{(4-d-e)/2} (I)

enthalten, wobei
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und hydrolysierbarer Rest bedeutet,
d gleich 0, 1, 2 oder 3, bevorzugt 1 oder 2, ist und
e gleich 0, 1, 2 oder 3, bevorzugt 0, 1 oder 2, ist,
mit der Maßgabe, dass die Summe d+e≤3 ist, pro Molekül 3 bis 15 Einheiten der Formel (I) vorhanden sind, pro Molekül mindestens 2 Reste X anwesend sind sowie pro Molekül mindestens eine Einheit der Formel (I) mit d=2 und e=0 anwesend ist.

Bevorzugt handelt es sich bei Rest R um einwertige Kohlenwasserstoffreste mit 1 bis 18 Kohlenstoffatomen, besonders bevorzugt um Alkylreste, den Vinyl- und den Phenylrest, insbesondere um den Methylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für Reste X sind Acetoxyreste, Oximatoreste und Organyloxyreste -OR¹, wobei R¹ einwertige, gegebenenfalls substituierte Kohlenwasserstoffreste, die durch Sauerstoffatome unterbrochen sein können, bedeutet, wie z.B. wie Methoxyreste, Ethoxyreste und Alkoxyethoxyreste.

Beispiele für Reste R¹ sind die für R angegebenen Reste.

Bevorzugt handelt es sich bei Rest X um Organyloxyreste -OR¹, wobei R¹ die obengenannte Bedeutung hat, besonders bevorzugt um den Methoxy- und Ethoxyrest, insbesondere um den Methoxyrest.

Besonders bevorzugt handelt es sich bei den erfindungsgemäß eingesetzten Vernetzern (B) um solche, die aus 3 bis 10, insbesondere 4 bis 6, Einheiten der Formel (I) bestehen.

Bei dem erfindungsgemäß eingesetzten Vernetzer (B) handelt es sich bevorzugt um bei Raumtemperatur und dem Druck der umgebenden Atmosphäre, also 900 bis 1100 hPa, flüssige Verbindungen.

Der erfindungsgemäß eingesetzte Vernetzer (B) hat eine Viskosität von bevorzugt 1,0 bis 20 mm²/s, besonders bevorzugt 2,0 bis 4,0 mm²/s, jeweils bei 25°C.

Der erfindungsgemäß eingesetzte Vernetzer (B) hat einen Flammpunkt von bevorzugt 15 bis 200°C, besonders bevorzugt 15 bis 40°C, insbesondere von 22 bis 30°C, jeweils bestimmt nach DIN 51 755 (Abel-Pensky).

Die erfindungsgemäß eingesetzten Vernetzer (B) können linear, verzweigt oder cyclisch sein, bevorzugt linear oder verzweigt.

Bevorzugt handelt es sich bei Vernetzer (B) um Verbindungen der Formel (II)

[XR₂SiO_{1/2}-]ₙ[XₖR₃₋ₖSiO_{1/2}-]ₚ [R₂SiO_{2/2}-]_{f} [XₘR₂₋ₘSiO_{2/2}-]_{g}

[XᵣR₁₋ᵣSiO_{3/2}-]ₕ [SiO_{4/2}-]ᵢ,

wobei
R und X die jeweils oben dafür angegebene Bedeutungen haben,
k gleich 2 oder 3 ist,
m gleich 1 oder 2 ist,
r gleich 0 oder 1 ist,
n 0 oder eine ganze Zahl von 1 bis 6, bevorzugt 1 bis 3, ist,
p 0 oder eine ganze Zahl von 1 bis 2, bevorzugt 0 bis 1, ist,
f eine ganze Zahl von 1 bis 13, bevorzugt 2 bis 4, ist,
g 0 oder 1 ist,
h 0 oder 1 ist,
i 0 oder 1 ist,
mit der Maßgabe, dass die Summe (n+p+f+g+h+i) eine Zahl von 3 bis 15, bevorzugt 3 bis 10, besonders bevorzugt 4 bis 6, ist.

Beispiele für die erfindungsgemäß eingesetzten Vernetzer (B) sind (MeO)SiMe₂O(SiMe₂O)₁₋₁₃SiMe₂(OMe),
(EtO)SiMe₂O(SiMe₂O)₁₋₁₃SiMe₂(OEt),
(MeO)₂SiMeO(SiMe₂O)₁₋₁₃SiMe₂(OMe), (MeO)₃SiO(SiMe₂O)₁₋₁₃SiMe₂(OMe),
(MeO)₂SiMeO(SiMe₂O)₁₋₁₃SiMe(OMe)₂,
(MeO)₂SiMeO(SiMe₂)₁₋₈Si(OMe)₃, (MeO)₃SiO(SiMe₂O)₁₋₈Si(OMe)₃,
(MeO)SiMe₂O(SiMe₂O)₁₋₆SiMe(OSi(OMe)Me₂)₂,
(MeO)SiMe₂O(SiMe₂O)₁₋₇SiMe(OMe)-OSiMe₂(OMe),
(MeO)SiMe₂O(SiMe₂O)₁₋₆Si(OMe)(OSi(OMe)Me₂)₂,
(MeO)SiMe₂O(SiMe₂O)₁₋₇Si(OMe)₂-OSiMe₂(OMe) und
(MeO)SiMe₂O(SiMe₂O)₁₋₅Si(OSi(OMe)Me₂)₃,
wobei Me die Bedeutung von Methylrest und Et die Bedeutung von Ethylrest hat.

Insbesondere handelt es sich bei den erfindungsgemäß eingesetzten Verbindungen (B) um (MeO)SiMe₂O(SiMe₂O)₂₋₄SiMe₂(OMe),
(MeO)₂SiMeO(SiMe₂O)₂₋₄SiMe₂(OMe), (MeO)₃SiO(SiMe₂O)₂₋₄SiMe₂(OMe),
(MeO)₂SiMeO(SiMe₂O)₂₋₄SiMe(OMe)₂,
(MeO)₂SiMeO(SiMe₂O)₂₋₄Si(OMe)₃, (MeO)₃SiO(SiMe₂O)₂₋₄Si(OMe)₃,
(MeO)SiMe₂O(SiMe₂O)₁₋₂SiMe(OSi(OMe)Me₂)₂,
(MeO)SiMe₂O(SiMe₂O)₁₋₃SiMe(OMe)-OSiMe₂(OMe),
(MeO)SiMe₂O(SiMe₂O)₁₋₂Si(OMe)(OSi(OMe)Me₂)₂,
(MeO)SiMe₂O(SiMe₂O)₁₋₃Si(OMe)₂-OSiMe₂(OMe) und
(MeO)SiMe₂O(SiMe₂O)₁₋₂Si(OSi(OMe)Me₂)₃,
wobei Me die Bedeutung von Methylrest und Et die Bedeutung von Ethylrest hat.

Die erfindungsgemäß eingesetzten Vernetzer (B) können nach beliebigen und vielfach bekannten Methoden hergestellt werden, wie z.B. durch eine teilweise Cohydrolyse von Silanen mit zwei hydrolysierbaren Gruppen und Silanen mit drei und/oder vier hydrolysierbaren Gruppen.

Bevorzugt werden die erfindungsgemäß eingesetzten Vernetzer (B) durch Equilibrierung von Silanen, die drei und/oder vier hydrolysierbare Gruppen aufweisen, mit Siloxanen, bei denen mindestens 95% aller Einheiten Diorganosiloxyeinheiten darstellen, bevorzugt in Anwesenheit von Equilibrierungskatalysator hergestellt. Als Equilibrierungskatalysator können alle bekannten sauren oder basischen Equilibrierungskatalysatoren, wie z.B. saure oder basische Ionenaustauscher, Schwefelsäure, Sulfonsäurederivate, lineare Phosphornitrilchloride oder deren Umsetzungsprodukte mit Aminen, starke Basen bzw. deren Umsetzungsprodukte mit Siloxanen, aber auch Alkoxytitanate oder Alkoxyzirkonate, verwendet werden. Gegebenenfalls können Alkohole zugegeben werden. Vorteilhafterweise werden die Katalysatoren nach erfolgter Umsetzung durch geeignete Maßnahmen, wie z.B. durch Behandlung mit Ionenaustauscher und/oder Filtration, oder Ausheizen, entfernt oder desaktiviert. Das so erhaltene Equilibrat kann - falls erwünscht - von niedermolekularen Verbindungen getrennt werden, wie etwa durch eine einfache Destillation oder mittels Durchlaufen eines Dünnschichtverdampfers.

Zusätzlich zu der oben beschriebenen Komponente (B) können die erfindungsgemäßen Massen nun alle Stoffe enthalten, die auch bisher in durch Kondensationsreaktion vernetzbaren Massen eingesetzt worden sind, wie z.B. Organosiliciumverbindung mit mindestens zwei kondensationsfähigen Gruppen (A), weitere Vernetzer (C), die verschieden sind zu Komponente (B), Katalysatoren (D), Weichmacher (E), Füllstoffe (F), Haftvermittler (G) und Additive (H).

Bevorzugt handelt es sich bei den erfindungsgemäßen Massen um solche enthaltend
(A) Organosiliciumverbindung mit mindestens zwei kondensationsfähigen Gruppen,
(B) Vernetzer aus Einheiten der Formel (I),
   gegebenenfalls
(C) weitere Vernetzer,
(D) Katalysator,
   gegebenenfalls
(E) Füllstoffe,
   gegebenenfalls
(F) Haftvermittler,
   gegebenenfalls
(G) Weichmacher und
   gegebenenfalls
(H) Additive.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also ≡Si-O-Si≡ -Strukturen, als auch um Silcarbane, also ≡Si-R''-Si≡ -Strukturen mit R'' gleich einem zweiwertigen, gegebenenfalls substituierten oder mit Heteroatomen unterbrochenen Kohlenwasserstoffrest oder beliebigen Organosiliciumgruppen aufweisende Copolymere handeln.

Im Rahmen der vorliegenden Erfindung sollen unter der Bezeichnung "kondensationsfähige" Reste auch solche Reste verstanden werden, die einen gegebenenfalls vorangehenden Hydrolyseschritt miteinschließen.

Bevorzugt handelt es sich bei den erfindungsgemäß eingesetzten Organosiliciumverbindungen (A) um solche enthaltend Einheiten der Formel

R² **ₐ**(OR³)_{b}Y_{c}SiO_{(4-a-b-c)/2} (III),

wobei
R² gleich oder verschieden sein kann und gegebenenfalls substituierte Kohlenwasserstoffreste, die durch Sauerstoffatome unterbrochen sein können, bedeutet,
R³ gleich oder verschieden sein kann und Wasserstoffatom oder einwertige, gegebenenfalls substituierte Kohlenwasserstoffreste, die durch Sauerstoffatome unterbrochen sein können, bedeutet,
Y gleich oder verschieden sein kann und Halogenatom, Pseudohalogenrest, Si-N-gebundene Aminreste, Amidreste, Oximreste, Aminoxyreste und Acyloxyreste bedeutet,
a 0, 1, 2 oder 3, bevorzugt 1 oder 2, ist,
b 0, 1, 2 oder 3, bevorzugt 0, 1 oder 2, besonders bevorzugt 0, ist und
c 0, 1, 2 oder 3, bevorzugt 0 oder 1, besonders bevorzugt 0, ist,
mit der Maßgabe, dass die Summe aus a+b+c kleiner oder gleich 4 ist und pro Molekül mindestens zwei kondensationsfähige Reste (OR³) anwesend sind.

Bevorzugt ist die Summe a+b+c kleiner oder gleich 3.

Bevorzugt handelt es sich bei Rest R² um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest R² aber auch um zweiwertige Reste handeln, die z.B. zwei Silylgruppen miteinander verbinden.

Beispiele für Rest R² sind die für Rest R angegebenen Beispiele.

Beispiele für zweiwertige Reste R² sind Polyisobutylendiylreste und propandiylterminierte Polypropylenglykolreste.

Beispiele für Reste R³ sind die für R angegebenen einwertigen Reste.

Bevorzugt handelt es sich bei Rest R³ um Wasserstoffatom oder Alkylreste mit 1 bis 12 Kohlenstoffatomen, besonders bevorzugt um Wasserstoffatom, Methyl- oder Ethylrest.

Besonders bevorzugt handelt es sich bei erfindungsgemäß eingesetzten Organosiliciumverbindungen (A) um solche der Formel

(OR³)₃₋ᵤR² ᵤSi- (SiR² ₂-O)ᵥ-SiRᵤ(OR³)₃₋ᵤ (IV),

wobei
R² und R³ eine der oben angegebenen Bedeutungen haben,
v gleich 30 bis 3000 ist und
u gleich oder verschieden sein kann und 1 oder 2 ist.

Vorzugsweise ist u gleich 2, wenn R³ die Bedeutung von Wasserstoffatom hat, und u gleich 1, wenn R³ eine Bedeutung verschieden Wasserstoffatom hat.

Beispiele für Organosiliciumverbindungen (A) sind
(MeO)₂MeSiO[SiMe₂O]₂₀₀₋₂₀₀₀SiMe(OMe)₂,
(HO)Me₂SiO[SiMe₂O]₂₀₀₋₂₀₀₀SiMe₂(OH),
(EtO)₂MeSiO[SiMe₂O]₂₀₀₋₂₀₀₀SiMe(OEt)₂,
(HO)MeViSiO[SiMe₂O]₂₀₀₋₂₀₀₀SiMeVi(OH),
(MeO)₂ViSiO[SiMe₂O]₂₀₀₋₂₀₀₀SiVi(OMe)₂ und
(EtO)₂ViSiO[SiMe₂O]₂₀₀₋₂₀₀₀SiVi(OEt)₂,
wobei Me Methylrest, Et Ethylrest und Vi Vinylrest bedeutet.

Die erfindungsgemäß eingesetzten Organosiliciumverbindungen (A) haben eine Viskosität von bevorzugt 100 bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Die erfindungsgemäßen Massen enthalten Vernetzer (B) in Mengen von vorzugsweise 1 bis 30 Gewichtsteilen, besonders bevorzugt 5 bis 15 Gewichtsteilen, jeweils bezogen auf 100 Gewichtsteile Komponente (A).

Bei den in den erfindungsgemäßen Massen gegebenenfalls eingesetzten weiteren Vernetzern (C) kann es sich um beliebige, bisher bekannte Vernetzer mit mindestens drei kondensationsfähigen Resten handeln, wie beispielsweise Silane mit mindestens drei Organyloxygruppen, die von Vernetzer (B) verschieden sind.

Besonders bevorzugt handelt es sich bei den in den erfindungsgemäßen Massen gegebenenfalls eingesetzten weiteren Vernetzern (C) um Silanvernetzer, wie Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis(trimethoxysilyl)ethan, 1,2-Bis(triethoxysilyl)ethan, 3-Aminopropyltrimethoxysilan, 3-(2-Aminoethyl)-aminopropyltrimethoxysilan, 3-(2-Aminoethyl)aminopropylmethyldimethoxysilan, Cyclohexylaminomethyltriethoxysilan, Methyltriacetoxysilan, Ethyltriacetoxysilan, Methyltris(methylethylketoximo)silan und Vinyltris(methylethylketoximo)silan.

Die in den erfindungsgemäßen Massen gegebenenfalls eingesetzten weiteren Vernetzer (C) sind handelsübliche Produkte bzw. können nach in der Siliciumchemie bekannten Verfahren hergestellt werden.

Falls die erfindungsgemäßen Massen weitere Vernetzer (C) enthalten, handelt es sich um Mengen von vorzugsweise 0,5 bis 10 Gewichtsteilen, besonders bevorzugt 1 bis 3 Gewichtsteilen, jeweils bezogen auf 100 Gewichtsteile Organopolysiloxan (A). Bevorzugt enthalten die erfindungsgemäßen Massen zusätzlichen Vernetzer (C).

Beispiele für Katalysatoren (D) sind die bisher schon bekannten Titanverbindungen, und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen wie Tetraethoxysilan, wobei Di-n-butylzinndiacetat und Dibutylzinnoxid in Tetraethylsilikat-Hydrolysat bevorzugt sind und Din-butylzinnoxid in Tetraethylsilikat-Hydrolysat besonders bevorzugt ist.

Falls die erfindungsgemäßen Massen Katalysator (D) enthalten, handelt es sich um Mengen von vorzugsweise 0,01 bis 3 Gewichtsteilen, bevorzugt 0,05 bis 2 Gewichtsteilen, jeweils bezogen auf 100 Gewichtsteile Bestandteil (A).

Beispiele für Weichmacher (E) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, sowie hochsiedende Kohlenwasserstoffe, wie zum Beispiel Paraffinöle oder Mineralöle bestehend aus naphthenischen und paraffinischen Einheiten.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (F) eingesetzt werden, handelt es sich bevorzugt um hydrophile pyrogene Kieselsäure und gefälltes oder gemahlenes Calciumcarbonat.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A) .

Beispiele für die in den erfindungsgemäßen Massen eingesetzten Haftvermittler (G) sind Silane und Organopolysiloxane mit funktionellen Gruppen, wie beispielsweise solche mit Glycidoxypropyl-, Aminopropyl-, Aminoethylaminopropyl-, Ureidopropyl- oder Methacryloxypropylresten.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester, und organischen Lösungsmittel, wie Alkylaromaten.

Die erfindungsgemäßen Massen enthalten Additive (H) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Besonders bevorzugt handelt es sich bei den erfindungsgemäßen Massen um solche, die aus
(A) Organosiliciumverbindungen enthaltend Einheiten der Formel (III),
(B) Organosiloxan aus Einheiten der Formel (I),
(C) Vernetzer,
(D) Katalysator,
   gegebenenfalls
(E) Weichmacher,
(F) Füllstoffe,
   gegebenenfalls
(G) Haftvermittler und
   gegebenenfalls
(H) Additive
   bestehen.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehalts der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind und über einen langen Zeitraum eine hohe Lagerstabilität aufweisen.

Die erfindungsgemäßen Massen haben den Vorteil, dass der Modul gezielt eingestellt werden kann.

Des Weiteren haben die erfindungsgemäßen Massen den Vorteil, dass sie gleichmäßig durchhärten. Die frisch gebildete Haut ist dabei elastische, und somit ist die Frühfestigkeit überraschenderweise hoch.

Ferner haben die erfindungsgemäßen Massen den Vorteil, dass Tropfen von Wasser oder Glättungsmittel, d.h. Wasser mit Tensid, die auf der Oberfläche der vernetzten Massen verblieben sind, einen nicht sichtbaren Rückstand hinterlassen.

Des Weiteren haben die erfindungsgemäßen Massen den Vorteil, dass durch den Einsatz von oligomerem Vernetzer (B) das Ausdampfen von Vernetzer während des Aushärtens deutlich verringert werden kann. Dadurch ergibt sich eine geringere Belastung der Umwelt durch abgedampftem Vernetzer, was auch zu einer verringerten Hydrophobierung der unmittelbaren Umgebung des Anwendungsortes führt.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des weiteren beziehen sich alle Angaben von Teilen und Prozentsätzen, soweit nichts anderes angegeben ist, auf das Gewicht.

Die Shore-A-Härte wird nach DIN (Deutsche Industrie Norm) 53505-87 bestimmt.

Zur Beurteilung der Gleichmäßigkeit der Durchhärtung wurde die Differenz der Shore-A-Härte von der Ober- und Unterseite der Härteplatten nach DIN (Deutsche Industrie Norm) 53505-87 bestimmt .

Die Reißfestigkeit wird nach DIN 53504-85 S2 bestimmt.

Die Reißdehnung wird nach DIN 53504-85 S2 bestimmt.

Der Modul ist der Spannungswert bei 100 % Dehnung.

### Beispiel 1

500 g Octamethylcyclotetrasiloxan, 187,5 g Methyltrimethoxysilan und 0,35 g einer 40 %igen Lösung von Tetrabutylphosphoniumhydroxid in Wasser wurden unter dem Ausschluss von Luftfeuchtigkeit 2 Stunden bei 120°C gerührt, dann abgekühlt und das Produkt mit 3 g saurem Ionenaustauscher auf Polystyrolbasis (käuflich erhältlich unter der Bezeichnung "Purolite CT 169 DR" bei der Fa. Purolite GmbH, Deutschland) neutralisiert und über einen feinen Filter abgefüllt.
Es werden 685 g eines Siloxanvernetzers erhalten.

Die 29-Si-NMR bestätigt einen Umsatz von 98 %, bezogen auf das Silan.
Ergebnisse aus der 29-Si-NMR-Analyse:
53,9% Me₂SiO, 25,8% (MeO)Me₂SiO_{0,5}, 9,9% (MeO)MeSiO, 3,6% Me-SiO_{1,5}, 3,6% (MeO)₂MeSiO_{0,5}, 2,8% Me₂Si(OMe)₂, 0,4% MeSi(OMe)₃. Die Viskosität beträgt 3,0 mm²/s, der Flammpunkt 24°C.

330 g eines Polydimethylsiloxangemischs, bei denen die Siloxane mit Dimethoxymethylsilyl- und/oder Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 80 000 mPa·s, 265 g eines trimethylsilylendblockierten Polydimethylsiloxans mit einer Viskosität von 1000 mPa·s, 7,5 g Methyltrimethoxysilan, 51 g des oben hergestellten Siloxanvernetzers, 12,5 g eines Haftvermittlers, der hergestellt wird durch die Umsetzung von 1 Teil Aminopropyltriethoxsilan mit 1 Teil Methyltriethoxysilan-Hydrolysat mit einem Ethoxygehalt von 37 %, und 4,5 g Aminopropyltrimethoxysilan werden in einem Planetenmischer miteinander gemischt und 15 Minuten gerührt. Anschließend wird der Ansatz durch homogenes Einmischen von 63 g pyrogener Kieselsäure mit einer spezifischen Oberfläche von 150 m²/g, 1,1 g Octylphosphonsäure, 1,4 g eines Polyethylenglykolpolypropylenglykol-copolymers mit einer Viskosität von 700 mPa·s und 2,5 g eines Zinnkatalysators, der hergestellt wird durch Umsetzung von Di-n-butylzinndiacetat und Tetraethoxysilan, vervollständigt.

Die so erhaltene Masse wurde in einer Dicke von 2 mm auf einer PE-Folie aufgetragen und bei 23°C/50 % rel. Luftfeuchtigkeit gelagert. Nach 7 Tagen Aushärtung wurden die mechanische Kennwerte am S2-Normstab entsprechend DIN 53 504 gemessen. Die Härte wurde nach 7 Tagen Aushärtung entsprechend DIN 53 505 ermittelt. Zur Ermittlung der Gleichmäßigkeit der Vulkanisation wurde die Differenz aus der Härte zwischen der Ober- und Unterseite bestimmt.

Die Probekörper werden hinsichtlich ihrer mechanischen Werte untersucht. Die Ergebnisse finden sich in Tabelle 1.

### Vergleichsbeispiel 1 (V1)

Die in Beispiel 1 beschriebene Verfahrensweise wird wiederholt mit der Abänderung, dass anstelle von 51 g Siloxanvernetzer 14 g Methyltrimethoxsilan eingesetzt werden.
Die Ergebnisse finden sich in Tabelle 1.

### Vergleichsbeispiel 2 (V2)

Die in Beispiel 1 beschriebene Verfahrensweise wird wiederholt mit der Abänderung, dass anstelle von 51 g Siloxanvernetzer 33 g eines Methyltrimethoxysilan-Hydrolysates mit einem Methoxygehalt von 29,0 % eingesetzt werden.
Die Ergebnisse finden sich in Tabelle 1.

**Tabelle 1**

| Beispiel | Härte Shore A | Härteunterschied Shore A | Modul N/mm² | Reißfestigkeit N/mm² | Reißdehnung % |
|---|---|---|---|---|---|
| 1 | 18 | 5,4 | 0,32 | 1,21 | 480 |
| V1 | 23 | 8,6 | 0,39 | 1,49 | 500 |
| V2 | 26 | 8,6 | 0,44 | 1,39 | 500 |

Der Vergleich von Beispiel 1 mit Vergleichsbeispiel 1 zeigt einen deutlich niedrigeren Modul sowie einen deutlich geringeren Härteunterschied und damit eine gleichmäßigere Durchhärtung der Massen gemäß Beispiel 1 als im Vergleichsbeispiel 1.

## Patentansprüche

1. Vernetzbare Massen auf der Basis von Organosiliciumverbindungen, **dadurch gekennzeichnet, dass** sie als Vernetzer (8) mindestens ein Organosiloxan aus Einheiten der Formel
R_{d}XₑSiO_{(4-d-e)/2} (I)
enthalten, wobei
R gleich oder verschieden sein kann und einwertige, gegebenenfalls substituierte Kohlenwasserstoffreste, die durch Sauerstoffatome unterbrochen sein können, bedeutet,
X gleich oder verschieden sein kann und hydrolysierbarer Rest bedeutet,
d gleich 0, 1, 2 oder 3 ist und
e gleich 0, 1, 2 oder 3 ist,
mit der Maßgabe, dass die Summe d+e≤3 ist, pro Molekül 3 bis 15 Einheiten der Formel (I) vorhanden sind, pro Molekül mindestens 2 Reste X anwesend sind sowie pro Molekül mindestens eine Einheit der Formel (I) mit d=2 und e=0 anwesend ist.

2. Vernetzbare Massen gemäß Anspruch 1, **dadurch gekennzeichnet, dass** es sich bei Vernetzer (B) um Verbindungen der Formel (II)
[R₂SiO_{1/2}-]ₙ[XₖR₃₋ₖSiO_{1/2}-]ₚ [R₂SiO_{2/2}-]_{f} [XₘR₂₋ₘSiO_{2/2}-]_{g} [XᵣR₁₋ᵣSiO_{3/2}-]ₕ [SiO_{4/2}-]ᵢ
handelt, wobei
R und X die jeweils oben dafür angegebene Bedeutungen haben,
k gleich 2 oder 3 ist,
m gleich 1 oder 2 ist,
r gleich 0 oder 1 ist,
n 0 oder eine ganze Zahl von 1 bis 6 ist,
p 0 oder eine ganze Zahl von 1 bis 2 ist,
f eine ganze Zahl von 1 bis 13 ist,
g 0 oder 1 ist,
h 0 oder 1 ist,
i 0 oder 1 ist,
mit der Maßgabe, dass die Summe (n+p+f+g+h+i) eine Zahl von 3 bis 15 ist.

3. Vernetzbare Massen gemäß Anspruch 1 oder 2, **dadurch gekennzeichnet, dass** es sich bei Rest X um Organyloxyreste -OR¹ handelt, wobei R¹ einwertige, gegebenenfalls substituierte Kohlenwasserstoffreste, die durch Sauerstoffatome unterbrochen sein können, bedeutet.

4. Vernetzbare Massen gemäß einem oder mehreren der Ansprüche 1 bis 3, **dadurch gekennzeichnet, dass** Vernetzer (B) einen Flammpunkt von 15 bis 200°C, bestimmt nach DIN 51 755 (Abel-Pensky), aufweist.

5. Vernetzbare Massen gemäß einem oder mehreren der Ansprüche 1 bis 4, **dadurch gekennzeichnet, dass** es sich um solche handelt enthaltend
(A) Organosiliciumverbindung mit mindestens zwei kondensationsfähigen Gruppen,
(B) Vernetzer aus Einheiten der Formel (I), gegebenenfalls
(C) weitere Vernetzer,
(D) Katalysator,
gegebenenfalls
(E) Füllstoffe,
gegebenenfalls
(F) Haftvermittler,
gegebenenfalls
(G) Weichmacher und
gegebenenfalls
(H) Additive.

6. Vernetzbare Massen gemäß einem oder mehreren der Ansprüche 1 bis 5, **dadurch gekennzeichnet, dass** sie Vernetzer (B) in Mengen von 1 bis 30 Gewichtsteilen, bezogen auf 100 Gewichtsteile Komponente (A), enthalten.

7. Vernetzbare Massen gemäß einem oder mehreren der Ansprüche 1 bis 6, **dadurch gekennzeichnet, dass** es sich um solche handelt, die aus
(A) Organosiliciumverbindungen enthaltend Einheiten der Formel (III),
R²ₐ(OR³)_{b}Y,SiO _{(4-a-b-c)/2} (III),
wobei
R² gleich oder verschieden sein kann und gegebenenfalls substituierte Kohlenwasserstoffreste, die durch Sauerstoffatome unterbrochen sein können, bedeutet,
R³ gleich oder verschieden sein kann und Wasserstoffatom oder einwertige, gegebenenfalls substituierte Kohlenwasserstoffreste, die durch Sauerstoffatome unterbrochen sein können, bedeutet,
Y gleich oder verschieden sein kann und Halogenatom, Pseudohalogenrest, Si-N-gebundene Aminreste, Amidreste, Oximreste, Aminoxyreste und Acyloxyreste bedeutet,
a 0, 1, 2 oder 3, bevorzugt 1 oder 2, ist,
b 0, 1, 2 oder 3, bevorzugt 0, 1 oder 2, besonders bevorzugt 0, ist und
c 0, 1, 2 oder 3, bevorzugt 0 oder 1, besonders bevorzugt 0, ist,
mit der Maßgabe, dass die Summe aus a+b+c kleiner oder gleich 4 ist und pro Molekül mindestens zwei kondensationsfähige Reste (OR³) anwesend sind,
(B) Organosiloxan aus Einheiten der Formel (I),
(C) Vernetzer,
(D) Katalysator,
gegebenenfalls
(E) Weichmacher,
(F) Füllstoffe,
gegebenenfalls
(G) Haftvermittler und
gegebenenfalls
(H) Additive
bestehen.

8. Formkörper, hergestellt durch Vernetzung der Massen gemäß einem oder mehreren der Ansprüche 1 bis 7.

## Claims

1. Crosslinkable compositions based on organosilicon compounds, **characterized in that** they comprise as crosslinkers (B) at least one organosiloxane composed of units of the formula
R_{d}XₑSiO_{(4-d-e)/2} (I)
where
R may be the same or different and is a monovalent, optionally substituted hydrocarbon radical which may be interrupted by oxygen atoms,
X may be the same or different and is a hydrolyzable radical, d is 0, 1, 2 or 3 and
e is 0, 1, 2 or 3,
with the proviso that the sum of d+e is ≤3, from 3 to 15 units of the formula (I) are present per molecule, at least two X radicals are present per molecule and at least one unit of the formula (I) where d=2 and e=0 is present per molecule.

2. Crosslinkable compositions according to Claim 1, **characterized in that** the crosslinkers (B) comprise compounds of the formula (II)
[XR₂SiO_{1/2}-]ₙ [XₖR₃₋ₖSiO_{1/2}-]ₚ [R₂SiO_{2/2}-]_{f} [XₘR₂₋ₘSiO_{2/2}-]_{g} [XᵣR₁₋ᵣSiO_{3/2}-]ₕ [SiO_{4/2}-]ᵢ
where
R and X are each as defined above,
k is 2 or 3,
m is 1 or 2,
r is 0 or 1,
n is 0 or an integer from 1 to 6,
p is 0 or an integer from 1 to 2,
f is an integer from 1 to 13,
g is 0 or 1,
h is 0 or 1,
i is 0 or 1,
with the proviso that the sum of (n+p+f+g+h+i) is from 3 to 15.

3. Crosslinkable compositions according to Claim 1 or 2, **characterized in that** the X radical is organyloxy radicals -OR¹ where R¹ is monovalent, optionally substituted hydrocarbon radicals which may be interrupted by oxygen atoms.

4. Crosslinkable compositions according to one or more of Claims 1 to 3, **characterized in that** crosslinkers (B) have a flashpoint of from 15 to 200°C, determined to DIN 51 755 (Abel-Pensky) .

5. Crosslinkable compositions according to one or more of Claims 1 to 4, **characterized in that** they comprise
(A) organosilicon compound having at least two condensable groups,
(B) crosslinker composed of units of the formula (I), optionally
(C) further crosslinkers,
(D) catalyst,
optionally
(E) fillers,
optionally
(F) adhesion promoters,
optionally
(G) plasticizers and
optionally
(H) additives.

6. Crosslinkable compositions according to one or more of Claims 1 to 5, **characterized in that** they contain crosslinkers (B) in amounts of from 1 to 30 parts by weight, based on 100 parts by weight of component (A).

7. Crosslinkable compositions according to one or more of Claims 1 to 6, **characterized in that** they consist of
(A) organosilicon compounds containing units of the formula (III),
R²ₐ (OR³) _{b}Y_{c}SiO_{(4-a-b-c)/2} (III)
where
R² may be the same or different and is an optionally substituted hydrocarbon radical which may be interrupted by oxygen atoms,
R³ may be the same or different and is a hydrogen atom or a monovalent, optionally substituted hydrocarbon radical which may be interrupted by oxygen atoms,
Y may be the same or different and is a halogen atom, pseudohalogen radical, Si-N-bonded amine radical, amide radical, oxime radical, aminoxy radical or acyloxy radical,
a is 0, 1, 2 or 3, preferably 1 or 2,
b is 0, 1, 2 or 3, preferably 0, 1 or 2, more preferably 0, and
c is 0, 1, 2 or 3, preferably 0 or 1, more preferably 0,
with the proviso that the sum of a+b+c is less than or equal to 4 and at least two condensable radicals (OR³) are present per molecule,
(B) organosiloxane composed of units of the formula (I),
(C) crosslinker,
(D) catalyst,
optionally
(E) plasticizer,
(F) fillers,
optionally
(G) adhesion promoter and
optionally
(H) additives.

8. Moldings produced by crosslinking the compositions according to one or more of Claims 1 to 7.

## Revendications

1. Masses réticulables à base de composés organosiliciés, **caractérisées en ce qu'**elles contiennent comme réticulant (B) au moins une organosiloxane constitué d'unités de formule
R_{d}XₑSiO_{(4-d-e)/2} (I)
où
R peut être identique ou différent et signifie des radicaux hydrocarbonés monovalents, le cas échéant substitués, qui peuvent être interrompus par des atomes d'oxygène,
X peut être identique ou différent et signifie un radical hydrolysable,
d vaut 0, 1, 2 ou 3 et
e vaut 0, 1, 2 ou 3,
à condition que la somme d + e ≤ 3, qu'il existe par molécule 3 à 15 unités de formule (I), qu'il existe par molécule au moins deux radicaux et qu'il existe par molécule au moins une unité de formule (I) avec d = 2 et e = 0.

2. Masses réticulables selon la revendication 1, **caractérisées en ce qu'**il s'agit pour le réticulant (B) de composés de formule (II)
[XR₂SiO_{1/2}-]ₙ[XₖR₃₋ₖSiO_{1/2}-]ₚ[R₂SiO_{2/2}-]_{f}[XₘR₂₋ₘSiO_{2/2}-]_{g} [XᵣR₁₋ᵣSiO_{3/2}-]ₕ[SiO_{4/2}-]ᵢ
où
R et X ont à chaque fois la signification indiquée ci-dessus,
k vaut 2 ou 3,
m vaut 1 ou 2,
r vaut 0 ou 1,
n vaut 0 ou un nombre entier de 1 à 6,
p vaut 0 ou un nombre entier de 1 à 2,
f vaut un nombre entier de 1 à 13,
g vaut 0 ou 1,
h vaut 0 ou 1,
i vaut 0 ou 1,
à condition que la somme (n + p + f + g + h + i) vaille un nombre de 3 à 15.

3. Masses réticulables selon la revendication 1 ou 2, **caractérisées en ce qu'**il s'agit pour le radical X de radicaux de type organyloxy -OR¹, où R¹ signifie des radicaux hydrocarbonés monovalents, le cas échéant substitués, qui peuvent être interrompus par des atomes d'oxygène.

4. Masses réticulables selon l'une ou plusieurs des revendications 1 à 3, **caractérisées en ce que** le réticulant (B) présente un point éclair de 15 à 200°C, déterminé selon la norme DIN 51 755 (Abel-Pensky).

5. Masses réticulables selon l'une ou plusieurs des revendications 1 à 4, **caractérisées en ce qu'**il s'agit de masses contenant
(A) un composé organosilicié présentant au moins deux groupes condensables,
(B) un réticulant d'unités de formule (I),
le cas échéant
(C) d'autres réticulants,
(D) un catalyseur
le cas échéant
(E) des charges,
le cas échéant
(F) des promoteurs d'adhérence,
le cas échéant
(G) des plastifiants et
le cas échéant
(H) des additifs

6. Masses réticulables selon l'une ou plusieurs des revendications 1 à 5, **caractérisées en ce qu'**elles contiennent le réticulant (B) en des quantités de 1 à 30 parties en poids, par rapport à 100 parties en poids de composant (A).

7. Masses réticulables selon l'une ou plusieurs des revendications 1 à 6, **caractérisées en ce qu'**il s'agit de masses qui sont constituées par
(A) des composés organosiliciés contenant des unités de formule (III),
R²ₐ(OR³)_{b}Y_{c}SiO_{(4-a-b-c)/2} (III),
où
R² peut être identique ou différent et signifie des radicaux hydrocarbonés, le cas échéant substitués, qui peuvent être interrompus par des atomes d'oxygène,
R³ peut être identique ou différent et signifie un atome d'hydrogène ou des radicaux hydrocarbonés monovalents, le cas échéant substitués, qui peuvent être interrompus par des atomes d'oxygène,
Y peut être identique ou différent et signifie un atome d'halogène, un radical pseudohalogène, des radicaux amine liés par Si-N, des radicaux amide, des radicaux oxime, des radicaux aminoxy et des radicaux acyloxy,
a vaut 0, 1, 2 ou 3, de préférence 1 ou 2,
b vaut 0, 1, 2 ou 3, de préférence 0, 1 ou 2, de manière particulièrement préférée 0 et
c vaut 0, 1, 2 ou 3, de préférence 0 ou 1, de manière particulièrement préférée 0,
à condition que la somme de a + b + c soit inférieure ou égale à 4 et qu'il existe au moins deux radicaux condensables (OR³) par molécule,
(B) un organosiloxane d'unités de formule (I),
(C) un réticulant,
(D) un catalyseur,
le cas échéant
(E) des plastifiants,
(F) des charges,
le cas échéant
(G) des promoteurs d'adhérence et
le cas échéant
(H) des additifs.

8. Corps façonnés, produits par réticulation des masses selon l'une ou plusieurs des revendications 1 à 7.
